(19) **Europäisches Patentamt**

**European Patent Office**

**Office européen des brevets**

(11) **EP 0 788 922 B1**

(12) **EUROPÄISCHE PATENTSCHRIFT**

(45) Veröffentlichungstag und Bekanntmachung des Hinweises auf die Patenterteilung:
**08.10.2003   Patentblatt 2003/41**

(51) Int Cl.$^7$: **B60K 31/00**

(21) Anmeldenummer: **96113212.3**

(22) Anmeldetag: **17.08.1996**

(54) **Verfahren zur Geschwindigkeitsregelung eines Fahrzeuges**

Speed regulation method for a vehicle

Méthode de régulation de vitesse pour véhicule

(84) Benannte Vertragsstaaten:
**DE ES FR GB**

(30) Priorität: **28.09.1995   DE 19536012**

(43) Veröffentlichungstag der Anmeldung:
**13.08.1997   Patentblatt 1997/33**

(73) Patentinhaber: **Volkswagen Aktiengesellschaft**
**38436 Wolfsburg (DE)**

(72) Erfinder: **Hamberger, Werner, Dipl.-Ing.**
**76327 Pfinztal-Söllingen (DE)**

(74) Vertreter: **Meyer, Enno, Dr. et al**
**Weser & Kollegen**
**Patentanwälte**
**Radeckestrasse 43**
**81245 München (DE)**

(56) Entgegenhaltungen:
**WO-A-93/17406          DE-A- 4 201 142**
**DE-A- 19 502 954**

**Beschreibung**

Die Erfindung betrifft ein Verfahren zur Geschwindigkeitsregelung eines Fahrzeuges, bei dem ein erster Geschwindigkeits-Sollwert manuell vorgebbar ist und ein zweiter Geschwindigkeits-Sollwert in Abhängigkeit zumindest der Krümmungsverläufe oder der Kurvenradien der befahrenen Strecke und eines Sollquerbeschleunigungswertes ermittelt wird, die momentanen ersten und zweiten Geschwindigkeits-Sollwerte miteinander verglichen werden und eine Stellgröße zur Einstellung der Fahrgeschwindigkeit aufgrund des geringeren der beiden Geschwindigkeits-Sollwerte und eines gemessenen Geschwindigkeits-Istwertes von einer Regeleinrichtung erzeugt wird.

Aus der deutschen Offenlegungsschrift DE 195 02 954 A1 ist ein derartiges Verfahren zur Geschwindigkeitsregelung gemäß dem Oberbegriff des Anspruchs 1 bekannt. Bei dem Verfahren wird während des Fahrens auf einer gekrümmten Straße der zweite Geschwindigkeits-Sollwert zumindest aus einer vorgegebenen konstanten Querbeschleunigung und den Krümmungsverläufen bzw. den Kurvenradien berechnet.

Untersuchungen haben gezeigt, daß eine solche Ermittlung des zweiten Geschwindigkeits-Sollwertes zu Unbehagen und Akzeptanzproblemen bei den Fahrzeugführern führt, obwohl bei der Auslegung des System alle physikalischen Anforderungen berücksichtigt wurden.

Die Aufgabe der Erfindung ist es deshalb, ein Verfahren zur Geschwindigkeitsregelung zu schaffen, bei dem die Nachteile des Standes der Technik nicht auftreten.

Die Aufgabe wird durch die Merkmale des Patentanspruchs 1 gelöst. Vorteilhafte Aus- und Weiterbildungen sind in den Unteransprüchen dargestellt.

Gemäß einer Weiterbildung der Erfindung fließt in die Berechnung des Sollquerbeschleunigungswertes auch ein Kriterium für die Fahrgewohnheiten des Fahrzeugführers ein, so wird bei einem sportlichen Fahrer ein entsprechend erhöhter Sollquerbeschleunigungswert und bei einem eher ruhigen Fahrer ein entsprechend niedriger Sollquerbeschleunigungswert für die Berechnung des zweiten Geschindigkeits-Sollwertes eingesetzt.

Die für die Ermittlung des zweiten Geschwindigkeits-Sollwertes benötigen Kurvenradien oder Krümmungsverläufe können entweder direkt gemessen werden, hier stehen beispielsweise die Ausgangssignale der Raddrehzahlsensoren zur Verfügung, oder aus vorhandenen Datensätzen, z. B. digitalisierten Karten eines Navigationsgerätes, errechnet oder übernommen werden. Neben dem Sollquerbeschleunigungswert und den Kurvenradien bzw. Krümmungsverläufen der befahrenen Strecke kann es außerdem sinnvoll sein, weitere aktuelle Straßenzustandsdaten (Haftbeiwert, Welligkeit) bei der Berechnung des zweiten Geschwindigkeit-Sollwertes zu berücksichtigen.

Nachfolgend wird die Erfindung anhand eines Ausführungsbeispiels näher beschrieben. Die zugehörigen Zeichnungen zeigen:

Figur 1   ein Schaltbild der Geschwindigkeitsregelung

Figur 2   einen Verlauf der Sollquerbeschleunigung in Abhängigkeit des Kurvenradiusses

Figur 3   die Sollquerbeschleunigung in Abhängigkeit des Kurvenradiusses der Fahrgewohnheiten des Fahrzeugführers und

Figur 4   einen Verlauf der Geschwindigkeits-Sollwerte in Abhängigkeit von streckenspezifischen Kennwerten.

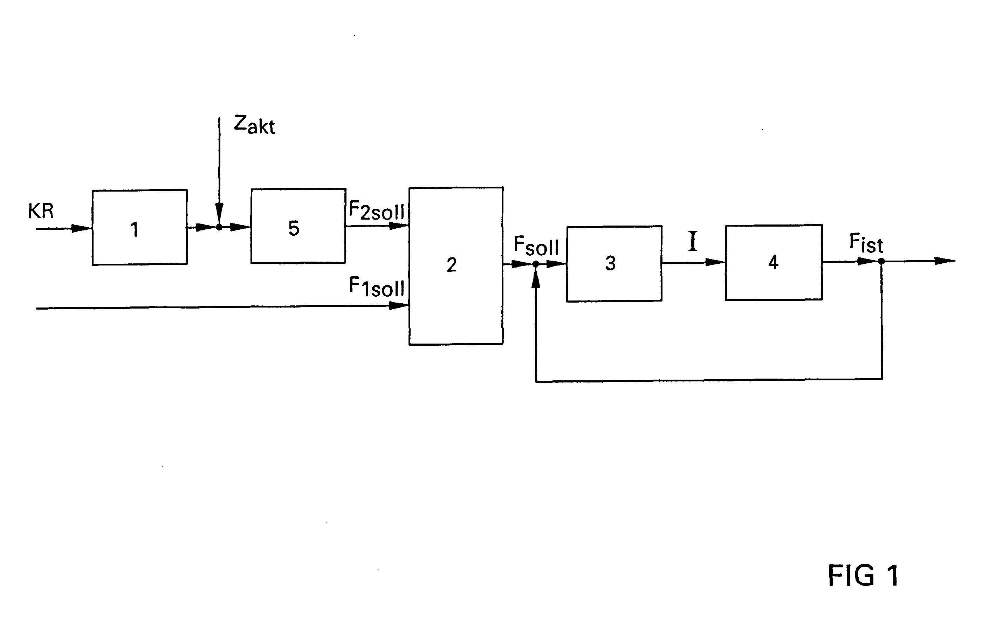

In Figur 1 ist das Schaltbild der Geschwindigkeitsregelung dargestellt, bei der die spezifischen streckenabhängigen Kennwerte über ein aktivierbares Lernprogramm beim erstmaligen Durchfahren einer oft zu befahrenen Strecke wie zum Beispiel die Fahrwege zum Arbeitsplatz oder zum Einkaufszentrum ermittelt und im Speicher 1 abgelegt werden. Eine andere Möglichkeit sieht vor, bereits auf Fahrten abgespeicherte Streckenverläufe oder digitalisierte Karten aus Navigationsgeräten zu verwenden.

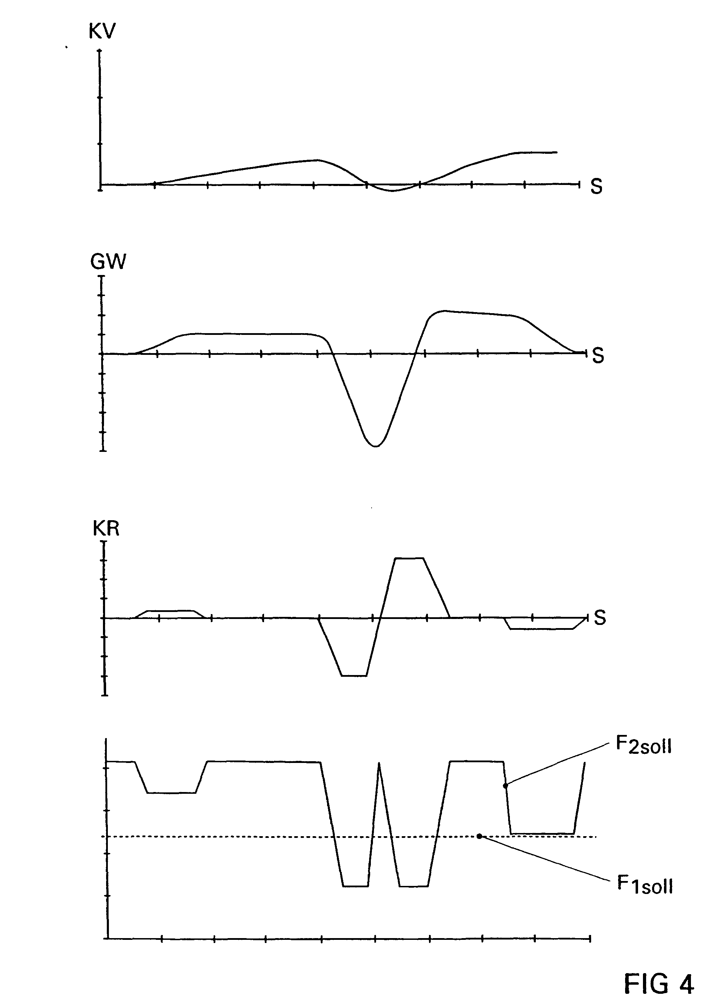

Als solche Kennwerte werden vorteilhafterweise Krümmungsverläufe bzw. Kurvenradien KR wie in Figur 4 dargestellt, verwendet. Vor Aktivierung der Geschwindigkeitsregelung stellt der Fahrzeugführer einen seinen Wünschen entsprechenden Geschwindigkeits-Sollwert $F_{1soll}$ ein, der gleichzeitig bis zur Eingabe eines geänderten Geschwindigkeits-Sollwertes $F_{1soll}$ abgespeichert wird. Im aktiven Zustand der Geschwindigkeitsregelung wird aus den abgespeicherten Kurvenradien KR über die Formel:

$$F_{2\,soll} = \sqrt{a_{soll} \cdot KR}$$

wobei $a_{soll}$ der Sollquerbeschleunigungswert ist, gegebenenfalls aus aktuellen Straßenzustandsdaten $Z_{akt}$ in einer Recheneinheit 5 ein streckenspezifischer zweiter Geschwindigkeits-Sollwert $F_{2soll}$ berechnet, der in der Vergleichseinheit 2 ständig mit dem ersten Geschwindigkeits-Sollwert $F_{1soll}$ verglichen wird. Liegt der Wert des streckenspezifischen Sollwertes $F_{2soll}$ unter dem vom Fahrer eingestellten Geschwindigkeits-Sollwert $F_{1soll}$, das heißt, die gefahrene Strecke erlaubt aus Gründen der Fahrsicherheit die vom Fahrer gewünschte Geschwindigkeit nicht, findet die Berechnung der Stellgröße I für die Einstellung der aktuellen Fahrgeschwindigkeit in Abhängigkeit der streckenspezifischen, zweiten Geschwindigkeits-Sollwertes $F_{2soll}$ statt. Steigt der Geschwindigkeits-Sollwert $F_{2soll}$ bei größeren Kurvenradien wieder an, wird der Sollwert $F_{soll}$ für die Geschwindigkeitsregelung wieder unter Verwendung des vom Fahrer gewünschten Geschwindigkeits-Sollwertes $F_{1soll}$ berechnet.

Der Regler 3 berechnet eine Stellgröße I für das leistungsbestimmende Element 4 im Sinne eines Vergleiches vom Geschwindigkeits-Istwert $F_{ist}$ mit dem Geschwindigkeitssollwert $F_{soll}$.

Die gewünschte Verbesserung der Fahrsicherheit durch Komforterhöhung und Entlastung des Fahrzeugführers tritt aber nur ein, wenn der Fahrzeugführer die Geschwindigkeitsregelung akzeptiert und dann auch häufig einsetzt. Um dies zu erreichen, ist es bei der Auslegung der Geschwindigkeitsregelung notwendig, nicht nur objektive physikalische Beschreibungsgrößen zu berücksichtigen, sondern auch mit Hilfe zusätzlicher Parameter zur Beeinflussung des Fahrzeugverhaltens das subjektive Empfinden des Fahrers zufrieden zu stellen.

Aus diesem Grund wird erfindungsgemäß zur Berechnung des zweiten Geschwindigkeits-Sollwertes $F_{2soll}$ nicht der den physikalischen Bedingungen der Streckengegebenheiten entsprechende, maximal zulässige Querbeschleunigungswert $a_{max}$, sondern ein entsprechend des Kurvenradiusses KR verminderter Sollquerbeschleunigungswert $a_{soll}$ verwendet. Dieser Sollquerbeschleunigungswert ergibt sich nach folgender Beziehung

$$a_{soll} = \frac{{}^a max - {}^a min}{KR \cdot A} + a_{min},$$

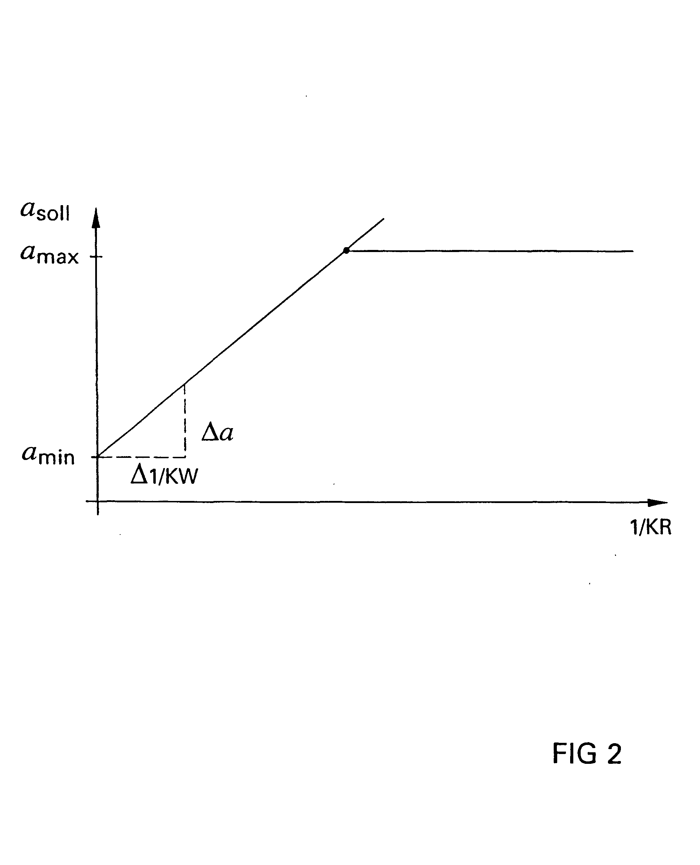

dabei ist $a_{max}$ die maximal zulässige Querbeschleunigung, $a_{min}$ ein am Fahrkomfort orientierter minimaler Querbeschleunigungswert und A eine über Fahrversuche empirisch ermittelte Einflußgröße und stellt die Geradensteigungen des Sollquerbeschleunigungswertes in Abhängigkeit des reziproken Kurvenradiusses KR dar. (Figur 2). Diese Einflußgröße kann entsprechend des Fahrverhaltens des Fahrzeugführers variabel sein, zu beachten ist jedoch, daß der Sollquerbeschleunigungswert $a_{soll}$ die maximal zulässige Querbeschleunigung $a_{max}$ aus physikalischen Gründen nicht überschreiten darf.

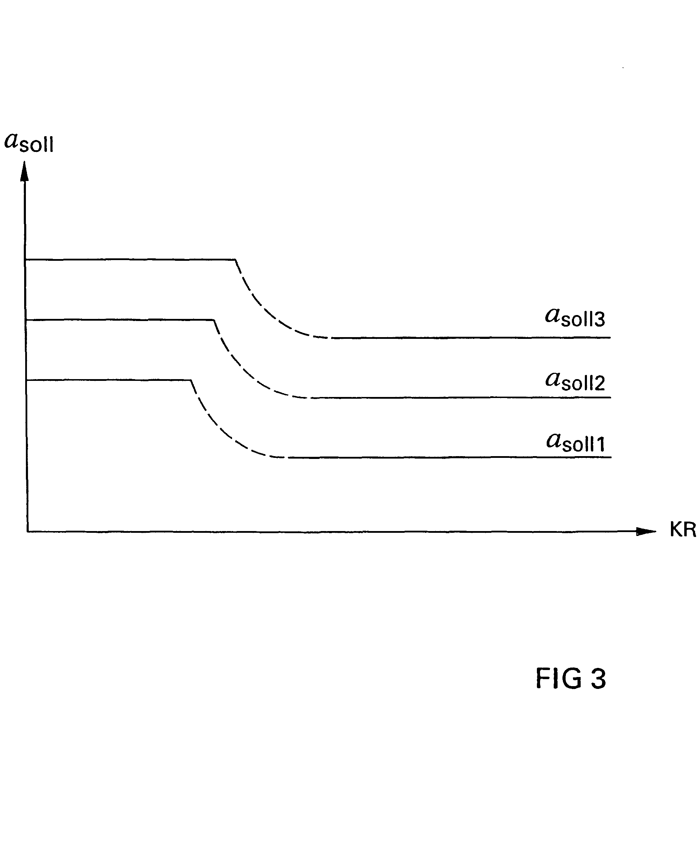

Eine weitere Anpassung des zweiten Geschwindigkeits-Sollwertes $F_{2soll}$ an das Fahrverhalten einzelner Fahrzeugführer ist in Figur 3 dargestellt. So kann der Sollquerbeschleunigungswert $a_{soll}$ entsprechend der Fahrgewohnheit angepaßt werden. Für einen Fahrzeugführer mit eher ruhiger Fahrweise wird in die Berechnung des zweiten Geschwindigkeit-Sollwertes der Sollquerbeschleunigungswert $a_{soll1}$ für einen sportlich fahrenden Fahrzeugführer der Beschleunigungswert $a_{soll3}$ einbezogen.

Figur 4 zeigt den Verlauf des ersten vorgegebenen Geschwindigkeits-Sollwertes $F_{1soll}$ und des fahrstreckenabhängigen zweiten Geschwindigkeit-Sollwertes $F_{2soll}$ während eines bestimmten Kurvenverlaufes KV, dessen Kurvenradien KR als charakteristische Kennwerte zum Beispiel während eines aktiven Lernvorgangs gespeichert und zur Berechnung des fahrbahnspezifischen Geschwindigkeit-Sollwertes $F_{2soll}$ verwendet werden.

## BEZUGSZEICHENLISTE

| | | |
|---|---|---|
| 1 | Speicher | |
| 2 | Vergleichseinheit | |
| 3 | Regler | |
| 4 | leistungsbestimmendes Element | |
| 5 | Recheneinheit | |
| KV | Kurvenverlauf | |
| KR | Kurvenradien | |
| $F_{1soll}$ | Geschwindigkeits-Sollwert | |
| $F_{2soll}$ | Geschwindigkeits-Sollwert | |
| $Z_{akt}$ | Straßenzustandsdaten | |
| I | Stellgröße | |
| $F_{soll}$ | Geschwindigkeits-Sollwert | |
| $F_{ist}$ | Geschwindigkeits-Istwert | |
| $a_{soll}$ | Sollquerbeschleunigungswert | |
| $a_{max}$ | maximal zulässige Querbeschleunigung | |
| $a_{min}$ | minimale Querbeschleunigung | |

**Patentansprüche**

1.   Verfahren zur Geschwindigkeitsregelung eines Kraftfahrzeuges, bei dem ein erster Geschwindigkeits-Sollwert ($F_{1soll}$) manuell vorgegeben und ein zweiter Geschwindigkeits-Sollwert ($F_{2soll}$) in Abhängigkeit zumindest der Krümmungsverläufe (KV) oder der Kurvenradien (KR) einer momentan befahrenen Strecke und eines Sollquerbeschleunigungswertes ($a_{soll}$) des Fahrzeuges ermittelt wird, der momentane erste und zweite Geschwindigkeits-Sollwert miteinander verglichen werden und eine Stellgröße zur Einstellung der Fahrgeschwindigkeit in Abhängigkeit des geringeren der beiden Geschwindigkeits-Sollwerte und eines gemessenen Geschwindigkeit-Istwertes von einer Regeleinrichtung erzeugt wird, wobei die Berechnung des Sollquerbeschleunigungswertes ($a_{soll}$) für die Ermittlung des zweiten Geschwindigkeits-Sollwertes ($F_{2soll}$) in Abhängigkeit eines maximal zulässigen Querbeschleunigungswertes ($a_{max}$), der sich aus dem Straßenzustand der momentan befahrenen Strecke (Haftbeiwert, Welligkeit) ergibt, und der Krümmungsverläufe (KV) oder der Kurvenradien (KR) der Strecke erfolgt, **dadurch gekennzeichnet, daß** sich der Sollquerbeschleunigungswert ($a_{soll}$) aus folgender Beziehung

$$a_{soll} = \frac{{}^a max - {}^a min}{KR \cdot A} + a_{min}$$

mit $a_{max}$ = maximal zulässiger Querbeschleunigungswert, $a_{min}$ = ein am Fahrkomfort orientierter vorgegebener minimaler Querbeschleunigungswert, KR = Kurvenradius der befahrenen Kurve und A = empirisch ermittelte Einflußgröße, ergibt, wobei der Sollquerbeschleunigungswert ($a_{soll}$) höchstens den Wert der maximal zulässigen Querbeschleunigung ($a_{max}$) annimmt.

2. Verfahren nach Anspruch 1, **dadurch gekennzeichnet, daß** der Sollquerbeschleunigungswert ($a_{soll}$) außerdem von den Fahrgewohnheiten (Sportlichkeit) des Fahrzeugführers abhängig ist.

3. Verfahren nach einem der Ansprüche 1 oder 2, **dadurch gekennzeichnet, daß** die Krümmungsverläufe oder die Kurvenradien (KR) der befahrenen Strecke über die Radzahldifferenz der inneren und äußeren Räder des Fahrzeuges ermittelt werden.

4. Verfahren nach einem der Ansprüche 1 bis 3, **dadurch gekennzeichnet, daß** die Krümmungsverläufe oder die Kurvenradien (KR) der befahrenen Strecke über einen aktivierbaren Lernvorgang abgespeichert werden.

5. Verfahren nach einem der Ansprüche 1 bis 3, **dadurch gekennzeichnet, daß** die Kurvenradien oder Krümmungsverläufe (KR) der zu befahrenen Strecke von vorhandenen Datensätzen berechnet oder übernommen werden.

6. Verfahren nach einem der Ansprüche 1 bis 5, **dadurch gekennzeichnet, daß** der zweite Geschwindigkeits-Sollwert ($F_{2soll}$) zusätzlich in Abhängigkeit der aktuellen Straßenzustandsdaten ermittelt wird.

**Claims**

1. Method for controlling the speed of a motor vehicle, in which a first speed setpoint value ($F_{1setp}$) is predefined manually, and a second speed setpoint value ($F_{2setp}$) is determined as a function of at least the curvature profiles (KV) or the curve radii (KR) of a route which is being travelled along at a particular time and of a setpoint transverse acceleration value ($a_{setp}$) of the vehicle, the instantaneous first and second speed setpoint values are compared with one another, and a manipulated variable is generated for setting the travel speed as a function of the smaller of the two speed setpoint values and of a measured speed actual value by a control device, the calculation of the setpoint transverse acceleration value ($a_{setp}$) for the determination of the second speed setpoint value ($F_{2setp}$) being carried out as a function of a maximum permissible transverse acceleration value ($a_{max}$) which is obtained from the condition of the road of the route which is being travelled along at a particular time (coefficient of friction, bumpiness), and as a function of the curvature profiles (KV) or the curve radii (KR) of the route, **characterized in that** the setpoint transverse acceleration value ($a_{setp}$) is obtained from the following relationship

$$a_{setp} = \frac{a_{max} - a_{min}}{KR \cdot A} + a_{min}$$

where $a_{max}$ = maximum permissible transverse acceleration value, $a_{min}$ = a predefined minimum transverse acceleration value which is oriented towards driving comfort, KR = curve radius of the bend travelled through and A = empirically determined influencing variable, the setpoint transverse acceleration value ($a_{setp}$) assuming at most the value of the maximum permissible transverse acceleration ($a_{max}$).

2. Method according to Claim 1, **characterized in that** the setpoint transverse acceleration value ($a_{setp}$) is also dependent on the driving habits (sportiness) of the driver of the vehicle.

3. Method according to either of Claims 1 or 2, **characterized in that** the curvature profiles or the curve radii (KR) of the route travelled along are determined by means of the difference between the wheel speeds of the inner and outer wheels of the vehicle.

4. Method according to one of Claims 1 to 3, **characterized in that** the curvature profiles or the curve radii (KR) of the route travelled along are stored by means of a learning process which can be activated.

5. Method according to one of Claims 1 to 3, **characterized in that** the curve radii or curvature profiles (KR) of the route to be travelled along are calculated or transferred from existing data records.

6. Method according to one of Claims 1 to 5, **characterized in that** the second speed setpoint value ($F_{2setp}$) is additionally determined as a function of the current road condition data.

**Revendications**

1. Procédé pour la régulation de la vitesse d'un véhicule automobile qui permet de programmer manuellement une première consigne de vitesse ($F_{1soll}$) et qui consiste à calculer une deuxième consigne de vitesse ($F_{2soll}$) en fonction des courbes (KV) ou rayons de courbure (KR) au moins d'un trajet parcouru instantanément et d'une consigne d'accélération transversale ($a_{soll}$) du véhicule, à comparer l'une avec l'autre les première et deuxième consignes de vitesse instantanées et à générer, par l'intermédiaire d'un dispositif de régulation, une grandeur de commande pour le réglage de la vitesse de roulage sur la base de la plus faible valeur des deux consignes de vitesse et d'une valeur réelle de vitesse mesurée, sachant que le calcul de la consigne d'accélération transversale ($a_{soll}$) pour l'obtention de la deuxième consigne de vitesse ($F_{2soll}$) s'effectue en fonction d'une valeur d'accélération transversale maximale admissible ($a_{max}$) résultant de l'état de la route du trajet parcouru instantanément (coefficient d'adhérence, irrégularité), et des courbes (KV) ou rayons de courbure (KR) du trajet, **caractérisé en ce que** la consigne d'accélération transversale ($a_{soll}$) résulte de la relation suivante :

$$a_{soll} = \frac{{}^a max - {}^a min}{KR \cdot A} + a_{min}$$

où $a_{max}$ = la valeur d'accélération transversale maximale admissible, $a_{min}$ = une valeur d'accélération transversale minimale prédéfinie tenant compte du confort de conduite, KR = le rayon de courbure du virage parcouru et A = une grandeur d'influence empirique, sachant que la consigne d'accélération transversale ne doit pas être supérieure à la valeur d'accélération transversale maximale admissible ($a_{max}$).

2. Procédé selon la revendication 1, **caractérisé en ce que** la consigne d'accélération transversale ($a_{soll}$) est également fonction du style de conduite (conduite sportive) du conducteur du véhicule.

3. Procédé selon l'une des revendications 1 ou 2, **caractérisé en ce que** les courbes ou rayons de courbure (KR) du trajet parcouru sont calculés à partir de la différence de vitesse de rotation des roues intérieures et extérieures du véhicule.

4. Procédé selon l'une des revendications 1 à 3, **caractérisé en ce que** les courbes ou rayons de courbure (KR) du trajet parcouru sont enregistrés par l'intermédiaire d'une procédure d'apprentissage activable.

5. Procédé selon l'une des revendications 1 à 3, **caractérisé en ce que** les rayons de courbure ou courbes (KR) du trajet à parcourir sont calculés ou repris à partir d'enregistrements de données existants.

6. Procédé selon l'une des revendications 1 à 5, **caractérisé en ce que** la deuxième consigne de vitesse ($F_{2soll}$) est en plus calculée en fonction des données courantes sur l'état de la route.

FIG 1

FIG 2

FIG 3

KV

S

GW

S

KR

S

F2soll

F1soll

FIG 4